# EUROPEAN PATENT SPECIFICATION

(11) **EP 2 122 062 B1**
(45) Date of publication and mention of the grant of the patent: **30.03.2011**
(21) Application number: 07824634.5
(22) Date of filing: 20.11.2007
(51) Int. Cl.: E02B 3/06, E02B 3/14

(54) **ASSEMBLY FOR DISSIPATING WAVE ENERGY THROUGH DIFFRACTION**
ANORDNUNG ZUM ABFÜHREN VON WELLENENERGIE DURCH ABLENKUNG
ENSEMBLE POUR DISSIPER DE L'ÉNERGIE DES VAGUES PAR DIFFRACTION

(30) Priority: 23.12.2006 GB 0625898
(43) Date of publication of application: 25.11.2009
(73) Proprietor: Tblocks Limited, Newcastle Upon Tyne NE1 3DX (GB)
(72) Inventor: THOMPSON, James, Alan, Northumberland NE64 6NU (GB)
(74) Representative: Byworth, Ian James
(86) International application number: PCT/GB2007/004419
(87) International publication number: WO 2008/078062

(56) References cited:
- DE-C- 179 836
- GB-A- 2 349 665
- US-A- 2 755 631

## Description

The present invention relates to an assembly for dissipating wave energy through diffraction, and relates particularly, but not exclusively, to an assembly for diffracting water waves.

Coastal structures such as breakwaters and seawalls are generally made from boulders of high density stone to create a sloping structure. These structures are often overlaid with concrete shapes designed to interlock randomly to absorb wave energy through voids.

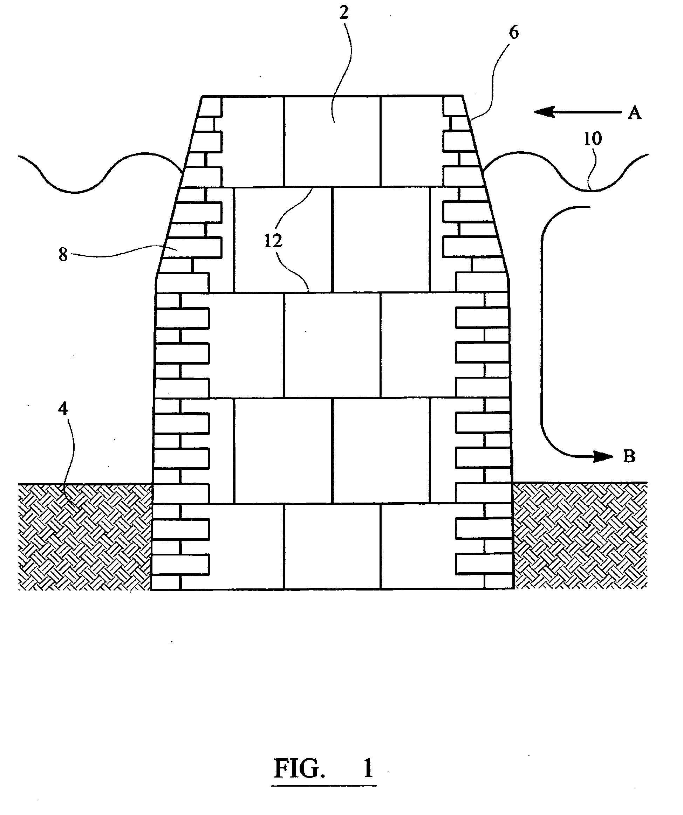

Figure 1 is a schematic diagram showing a known type of breakwater used at an entrance to a harbour. A plurality of large natural stone or concrete blocks 2 are sunk into the seabed 4 to form a breakwater having surfaces 6 formed by blockwork 8. Blocks 2 may be cemented together. Sea waves 10 propagating in the direction of arrow A impact surface 6. The wave energy is both absorbed by the structure formed by blocks 2 and also directed downwardly which causes a current of water to flow in the direction of arrow B. The horizontal planes 12 between blocks 2 act as shear planes such that the separate rows of blocks 2 can shift relative to one another over time. Also, water forced in the direction of arrow B can cause an effect known as scouring which erodes the lower structure of the breakwater at the base above and below the sea level, which in extreme cases can cause the breakwater to fail and collapse.

Similar effects can also occur at structures that are used for coastal defence, i.e. structures along a seafront rather than breakwaters. DE-A-179836 shows an assembly for dissipating wave energy through diffraction.

The present invention seeks to overcome the above disadvantages of the prior art.

According to the present invention, there is provided an assembly for dissipating wave energy through diffraction, the assembly comprising:
a plurality of first blocks and a plurality of second blocks, wherein each said first and second block includes a pair of substantially planar end faces and a plurality of substantially planar side faces, wherein a first side face meets an adjacent second side face to form an edge, and first and second cutouts are formed at the ends of said first and second side faces remote from said edge, and each said first block has a first height between said end faces and each said second block has a second height, different from said first height, between said end faces;
the assembly further comprising a base row of alternating first and second blocks interlocked by engagement of adjacent cutouts; and
at least one further row comprising a plurality of first blocks stacked on top of the base row, said at least one further row being laterally offset from the base row to form a stepped assembly, each said block being interlocked by engagement of adjacent cutouts.

This provides the advantage that the blocks can be arranged in rows interlocking vertically and horizontally at adjacent cutouts, the rows of blocks arranged such that respective edges face the incoming water waves to form a periodic structure that is stepped in two planes. Such a configuration causes wave interference from waves impacting the steps and faces of the assembly. Each edge and face acts as a point source of wave energy dissipation. The waves are diffracted by the faces and steps of the assembly into the oncoming water waves to cause interference. This results in a reduced oncoming wave intensity to prolong the life of the structure. The wave interference creates a standing wave near the face of the structure.

By providing first and second blocks having different heights, this provides the advantage that the blocks can be arranged such that the structure created is interlocked in both the horizontal and vertical directions such that there is no horizontal shear plane as with the structure of Figure 1 along which the structure can slip. Also, this prevents individual columns of blocks from falling over since the blocks can be interlocked at their respective cutouts. This provides a stronger structure.

In a preferred embodiment, each said block comprises a bore.

This provides the advantage that the bores can be filled with concrete to further increase the strength of the structure.

Preferred embodiments of the present invention will now be described, by way of example only, and not in any limitative sense, with reference to the accompanying drawings in which:
Figure 1 is a cross sectional view of a breakwater;
Figure 2a is a plan view of a block used in forming an assembly for dissipating wave energy through diffraction;
Figure 2b is a front view of the block of Figure 2a;
Figure 2c is a side view of the block of Figure 2a_{;}
Figure 3 is a perspective view of a block having profiled edges;
Figures 4a and 4b are perspective views of blocks of different sizes shown in scale compared to the size of a human;
Figure 5 is a perspective view of a block having fixtures for lifting;
Figure 6 is a perspective view of mould parts for forming the blocks;
Figure 7 is a perspective view of the blocks stacked in vertical columns;
Figure 8a is a plan view of a row of blocks interlocked to form an angled line;
Figure 8b is a plan view of a row of block interlocked to form a straight line;
Figure 8c is a plan view of a row of blocks interlocked to form a line angled in the opposite direction to that of Figure 8a;
Figure 9 is a schematic view of a row of blocks interlocked with a representation of the principle of diffraction;
Figures 10a to 10e are perspective and plan views showing the steps in construction of a vertical assembly for dissipating wave energy through diffraction;
Figures 11a to 11f are plan and schematic views of the steps in construction of a stepped assembly for dissipating wave energy through diffraction according to the present invention;
Figure 12 is a cross sectional view of a stepped assembly of blocks according to the present invention used to protect an existing coastal protection structure;
Figure 13a is a cross section of a stepped assembly of 2 metre blocks;
Figure 13b is a plan view of the assembly of Figure 13a;
Figure 14a is a cross section of a stepped assembly of 2.5 metre blocks;
Figure 14b is a plan view of the assembly of Figure 14a;
Figures 15a to 15d are cross sectional views showing the steps in construction of an assembly according to the present invention for protecting a landslip retaining wall that has a hydraulic profile on the seaward side;
Figure 16 is a cross sectional view of a prior art rock armour structure used to protect an existing seawall;
Figure 17a is a cross sectional view of a vertical assembly of blocks shown in comparison to a prior art rock armour structure; and
Figure 17b is a plan view of the assembly of Figure 17a.

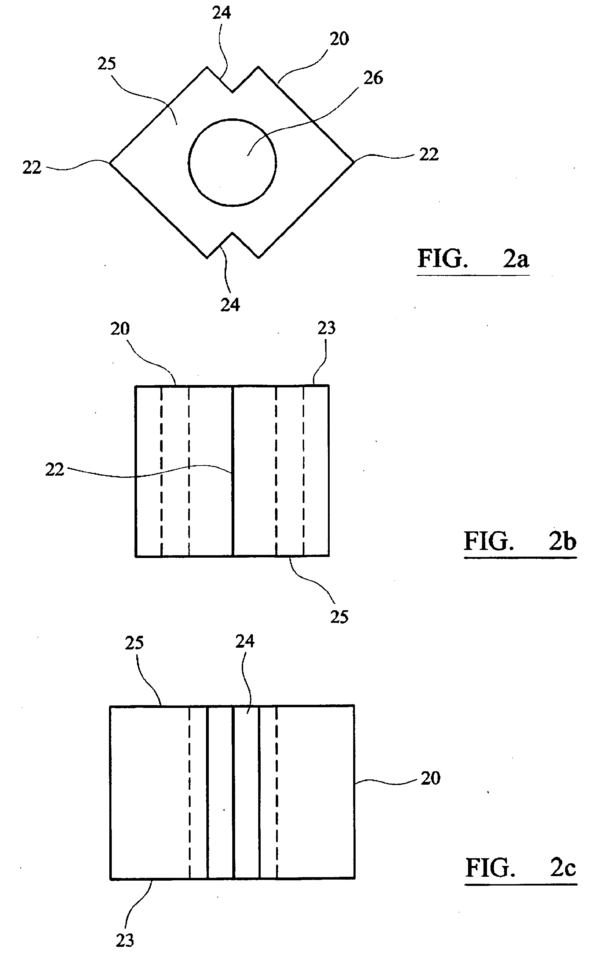

Referring to Figures 2a to 2c, a block 20 is formed from concrete in a cuboid shape and has forward and rear edges 22, substantially flat base 23 and upper surface 25 and cutouts 24 formed at two diagonally opposed corners. Shapes other than cuboids can be used, provided the base and upper surface are substantially flat, at least one edge and two cutouts are formed. For example, triangular blocks can be formed by removing one of the edges 22 of block 20. A cylindrical bore 26 is formed in the centre of the block along the vertical axis of the block 20.

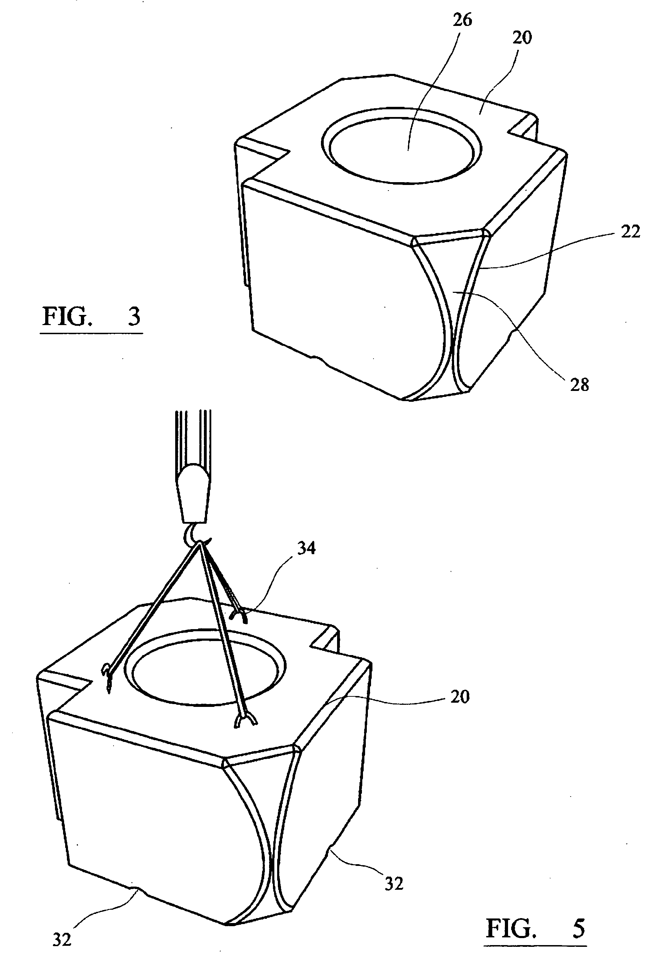

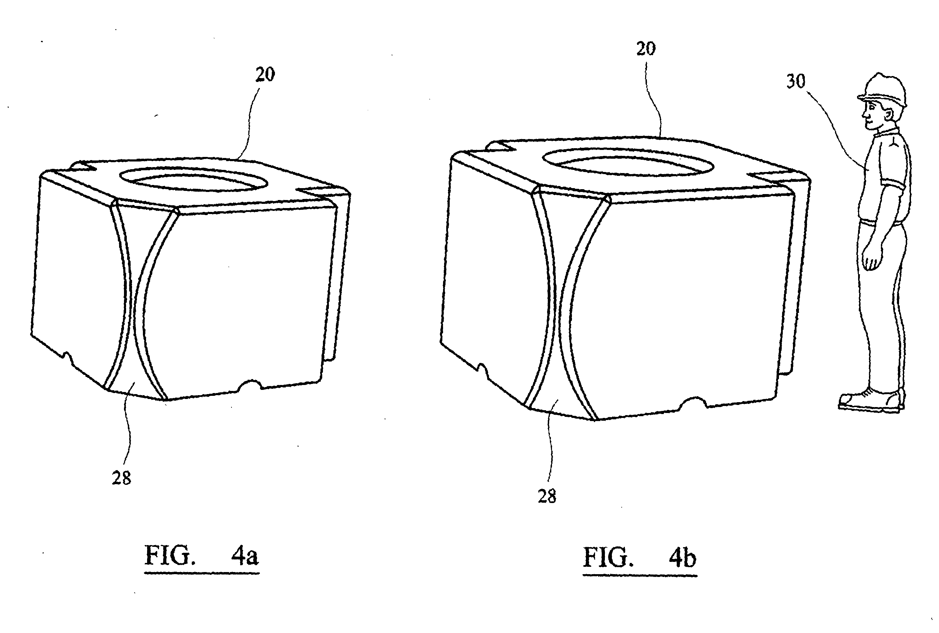

Referring to Figures 3 to 4b, the edges 22 of the blocks may comprise a profiled surface 28 to improve the appearance of the assembled blocks. Figures 4a and 4b show two different sizes of block compared to the size of an average man 30. An example of dimension x in Figure 3 is of the order of 1 metre and an example of height h in Figures 4a and 4b is 0.7 and 1.1 metres respectively. It will be apparent to the person skilled in the art that the size of block can be chosen for the particular application.

Referring to Figure 5, in order to lift the blocks a plurality of groves 32 can be provided on the base of the blocks in order to enable lifting by machinery, such as a forklift truck. Alternatively, metal hook portions 34 can be embedded in the concrete of the block during formation to enable lifting by a crane.

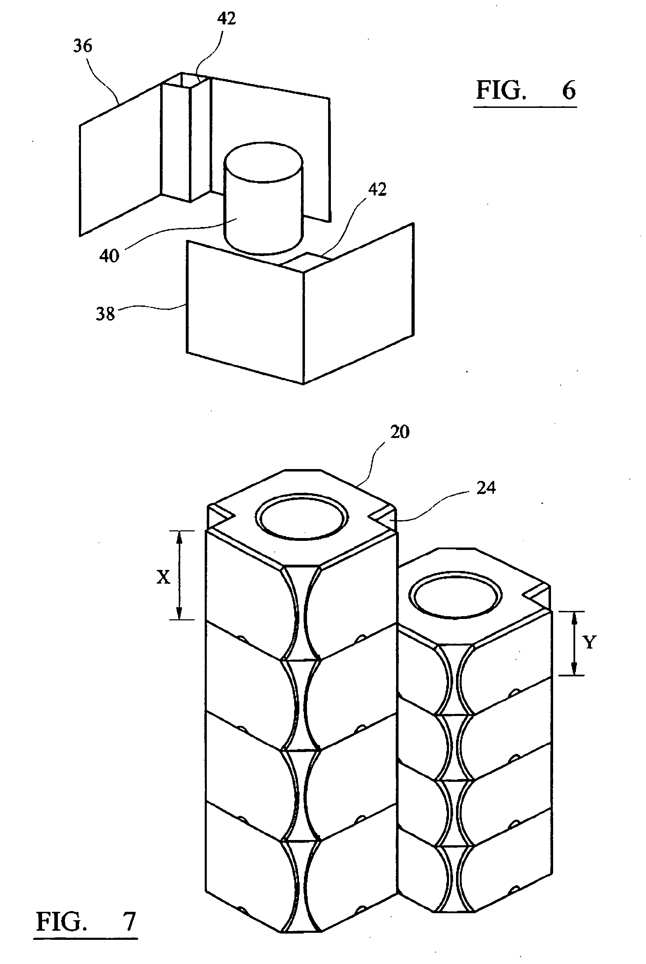

Referring to Figure 6, each block is moulded from concrete using three reusable mould parts 36 to 40. Mould parts 36 and 38 have projections 42 which are used to form the cutouts 24 in the corners of blocks 20.

Referring to Figure 7, a plurality of blocks 20 are stacked to form two columns interlocked by cutouts 24. The left hand column comprises blocks having height X and the right hand column comprises blocks having height Y. The lateral dimensions of the blocks having height X and Y are the same such that it is only the height of the blocks that differs. It can be seen from the drawings that as a result of the differing heights of the blocks, the two columns are interlocked in both the horizontal and vertical directions. For example, there is no single horizontal plane that runs across both columns. This means that there is no shear plane along which the layers of blocks can slip. Also, as a result of interlocking cutouts 24, the two columns are interlocked in the vertical direction.

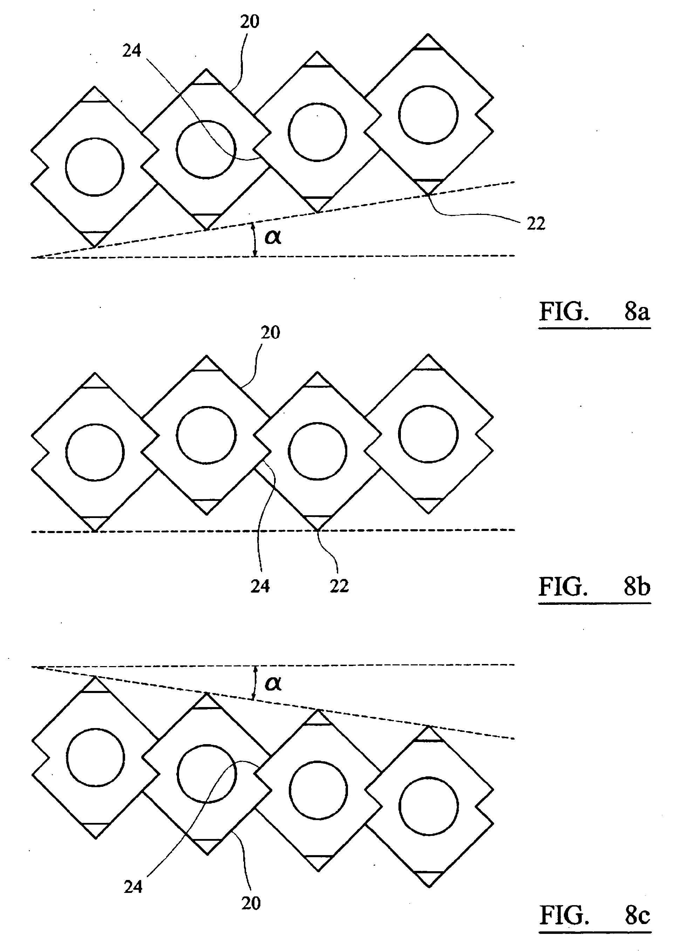

Referring to Figure 8a, a row of blocks 20 can be interlocked at cutouts 24 to form an angled plane shown by angle α. Alternatively, in Figure 8b the blocks are interlocked such that edges 22 present a substantially straight plane. Alternatively in Figure 8c the blocks 20 are interlocked at cutouts 24 to present a plane having angle α to the straight plane in the opposite direction to that of Figure 8a.

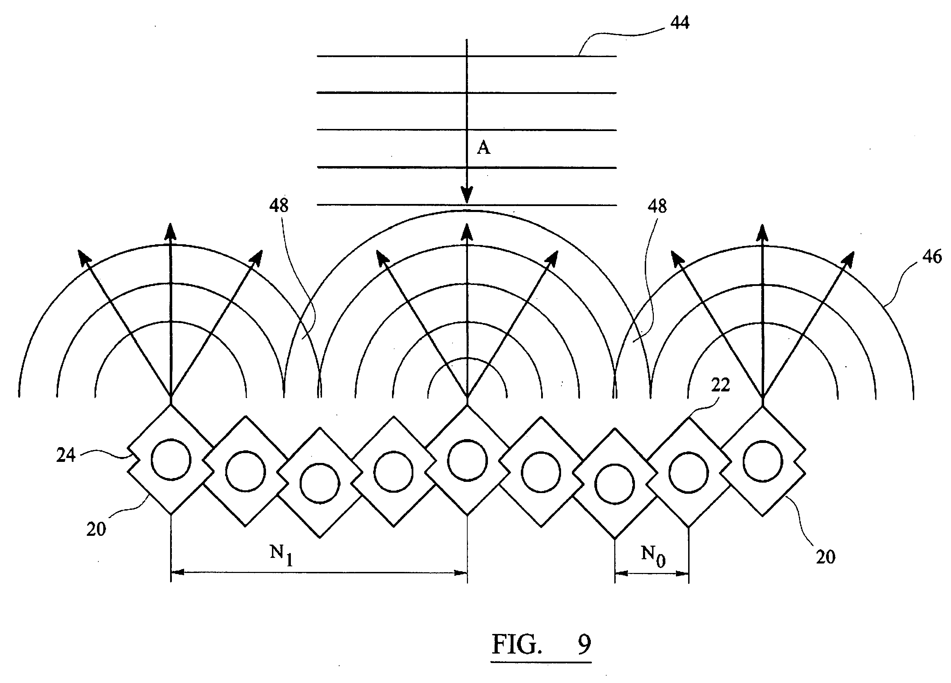

Referring to Figure 9, the use of a row of blocks to cause wave interference is shown. Blocks 20 form a row of blocks on a shoreline. Waves with wave crests 44 propagate in the direction of arrow A towards the shore. When the waves impact the row of blocks 20, the alternating peaks and troughs formed by the edges 22 of blocks 20 cause deflection of the waves from the faces of the assembly such that the deflected waves have circular wave fronts 46. The wave interference of the circular wave fronts 46 in the regions shown by reference numeral 48 results in a phenomenon known as near field diffraction. Circular wave fronts 46 also interfere with incoming waves 44.

The reflected wave crests from adjacent blocks cause diffraction. This wave pattern interferes with inbound waves 44 and as a result the incident wave spectrum is modified and becomes less coherent. This causes a wave calming effect on the surface of the water, which is witnessed as choppy water and results in the peak wave height being reduced when the modified waves impact the structure. As a result of the reduction of the wave amplitude impacting the structure, the wave energy is reduced which leads to a reduced scouring effect.

Two node lengths Nₒ and N₁ are shown in Figure 9. Node length Nₒ is formed by two adjacent edges 22 whereas node length N₁ is formed as a result of the contour of five interlocking blocks. It will be appreciated by persons skilled in the art that the node length can be chosen to cause wave reflection suitable for diffracting incoming waves of different wavelengths.

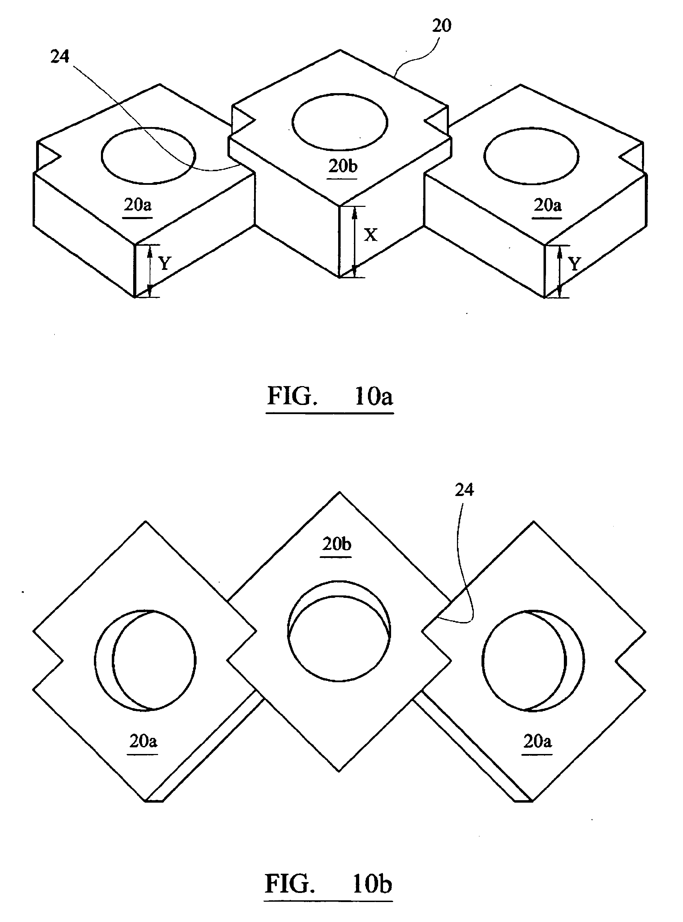

Referring to Figures 10a to 10e, construction of a generally vertical structure for reflecting water waves will be described.

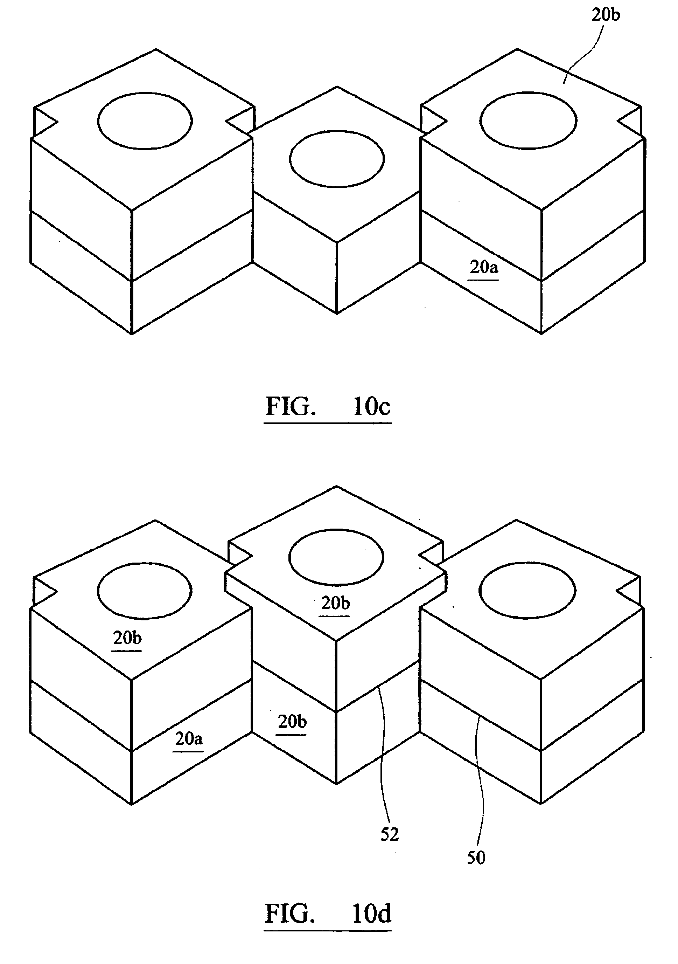

Figures 10a and 10b show a first row of blocks having two blocks 20a of height Y interlocked with a central block 20b of height X. Figure 10a shows a base row of three blocks. However, any amount of blocks can be used to form a row of required size provided that blocks having alternating height X and Y are used to form a stepped base layer. Referring to Figures 10c and 10d, a further layer of blocks 20b having height X are placed on the base blocks 20a having height Y.

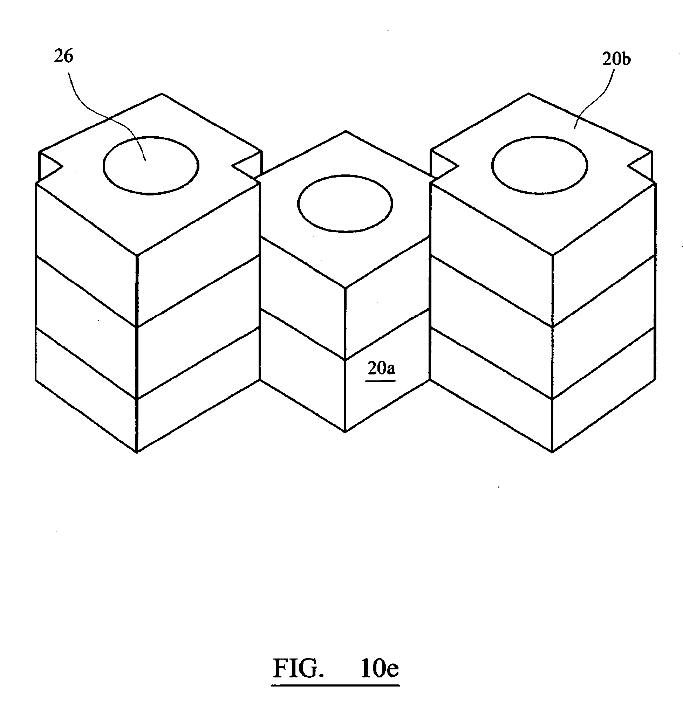

Referring to Figure 10d, block 20b having height X (such that all of the blocks in the second row have height X) is placed on the base block 20a having height X. It can be seen from Figure 10d that two horizontal planes 50 and 52 are formed between the base row and the second row. This means that there is no shear plane along which the second row can slip when subjected to wave impact. The interlocking of blocks at cutouts 24 also provides a vertical interlock. In Figure 10e, further blocks 20b having height X are placed on the second row to form a third row. In the vertical column assembly of Figures 10a to 10e, the bores 26 of each block are vertically aligned. The bores can be filled with concrete and/or piled to increase the strength of the structure.

The vertical structure of Figures 10a to 10e is suitable for use as a breakwater, i.e. a generally vertical structure that is used as a pier for an entrance to a harbour. It should be understood that blocks 20a and 20b can be used to form only the water facing surfaces of the structure, and other materials can be used behind the blocks.

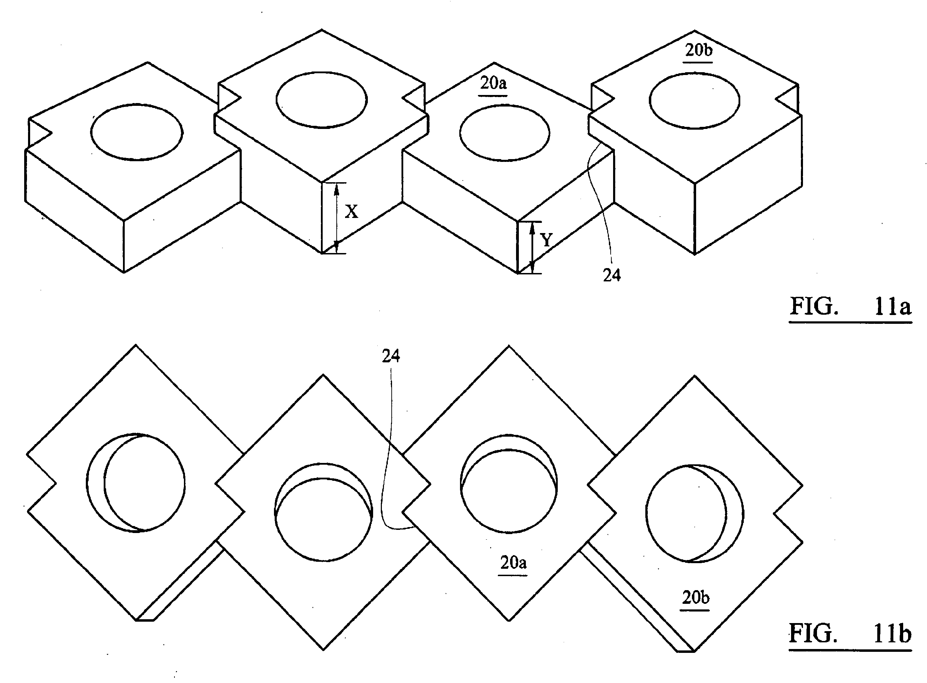

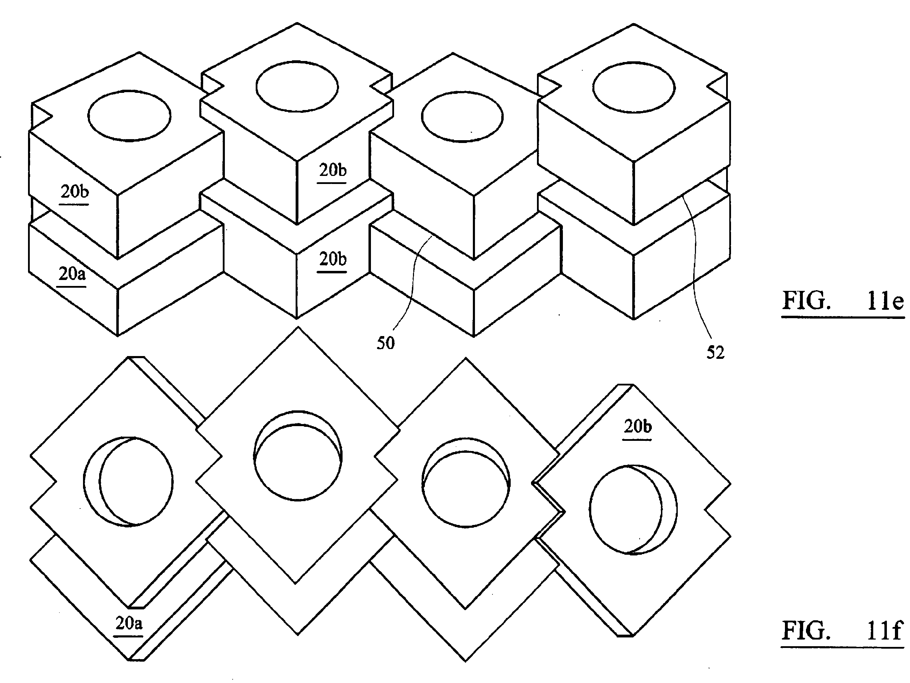

Referring to Figures 11a to 11f, construction of a stepped assembly for reflecting water waves will now be described.

Referring to Figures 11a and 11b, a base row of blocks 20a having height Y and blocks 20b having height X is formed, the blocks interlocking at cutouts 24.

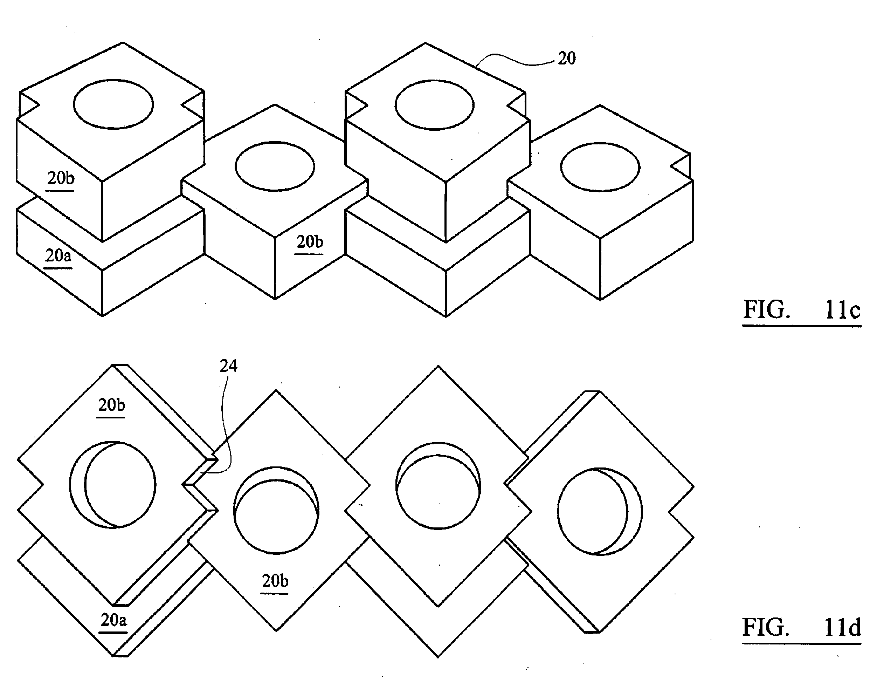

Referring to Figures 11c and 11d, blocks 20b in a second row are placed on blocks 20a of the first row. Blocks 20b in the second row are rearwardly displaced from blocks 20a of the first row. However, cutouts 24 of the second row of blocks still interlock with cutouts 24 of blocks 20b in the first row as shown in Figure 11d.

Referring to Figure 11e, the completed second row comprises blocks 20b all having height X. As a result of blocks 20a having height Y in the first row, the first and second rows are interlocked in two horizontal planes 50 and 52. Also, by laterally offsetting the second row rearwardly from the first row a stepped configuration is formed. It should be noted that even with the stepped configuration the blocks all interlock in both the horizontal and vertical directions. Such a stepped configuration is useful for coastal defence assemblies.

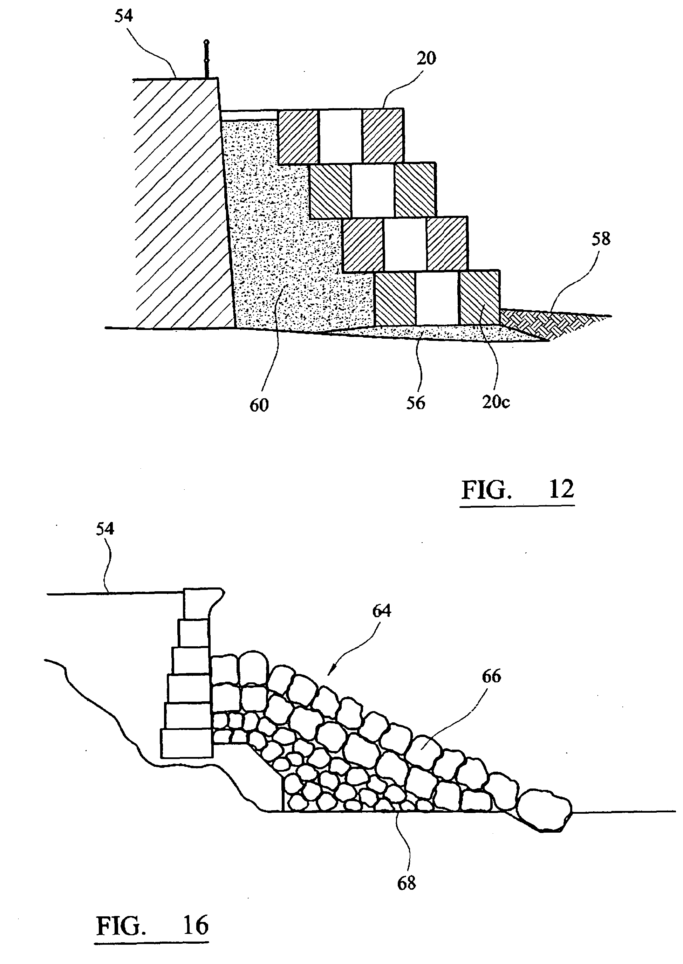

Referring to Figure 12, an assembly of blocks 20 can be used to protect an existing seawall 54. A base block 20c is placed on a bed 56 adjacent to the sea 58. The blocks are then stacked in the configuration shown in Figures 11a to 11f. The region behind the blocks 20 can be filled with recycled concrete, earth or lean mix 60.

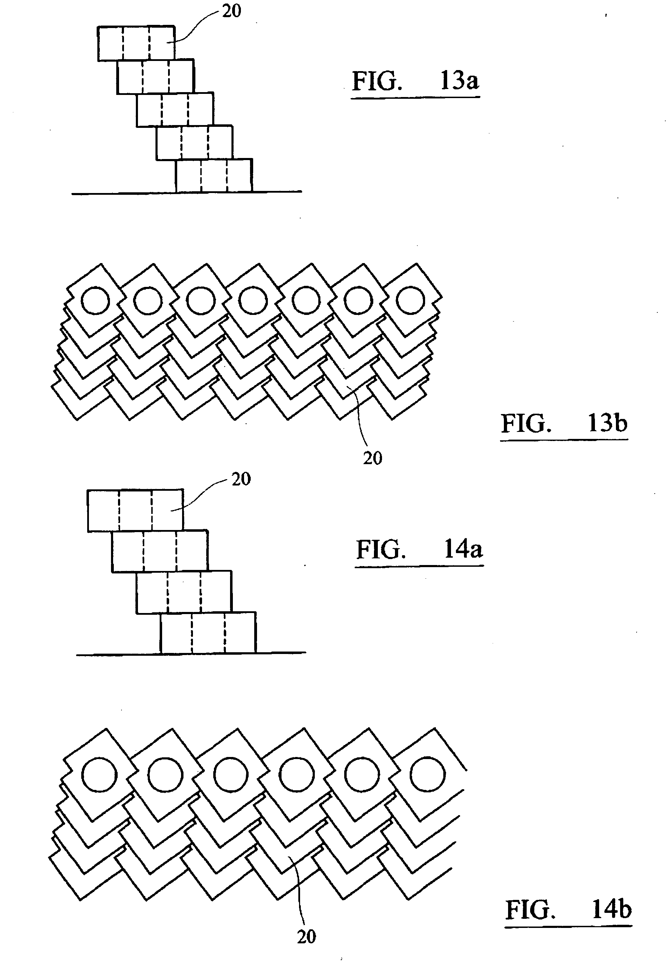

Figures 13a to 14b show different configurations of blocks 20 having different sizes. It will be apparent to the skilled person that blocks of different sizes can be chosen to satisfy different structural and tidal conditions.

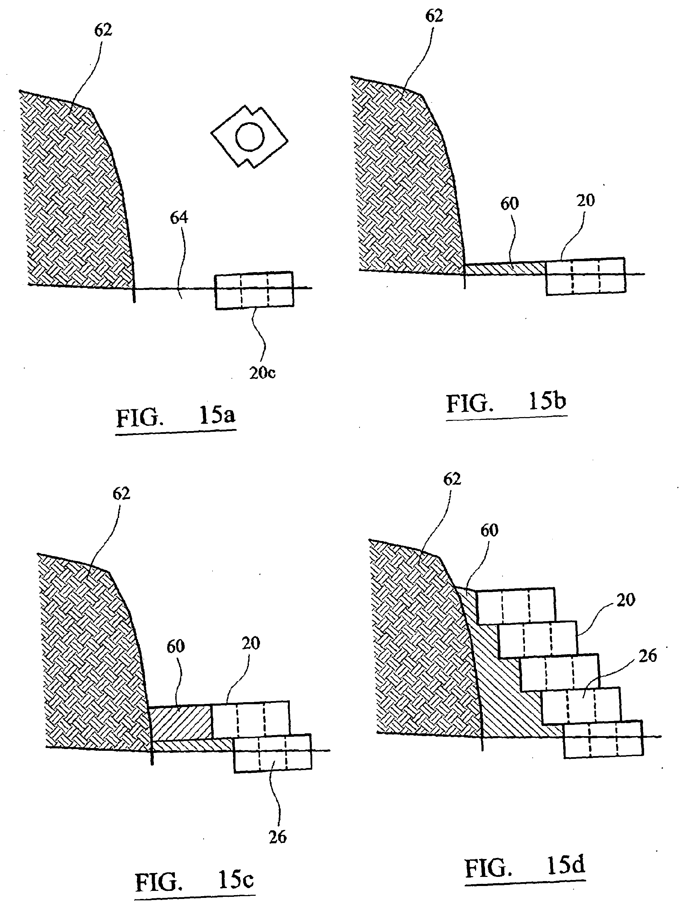

Referring to Figures 15a to 15d, the same principle as Figures 12 to 14 can be used to protect a landslip 62. A base block 20c is placed on a beach 64 and the region between the landslip 62 and the blocks 20 is filled with concrete or lean mix 60. It should also be noted that the cylindrical bores 26 can be filled with concrete even in the stepped configuration in order to reinforce the structure.

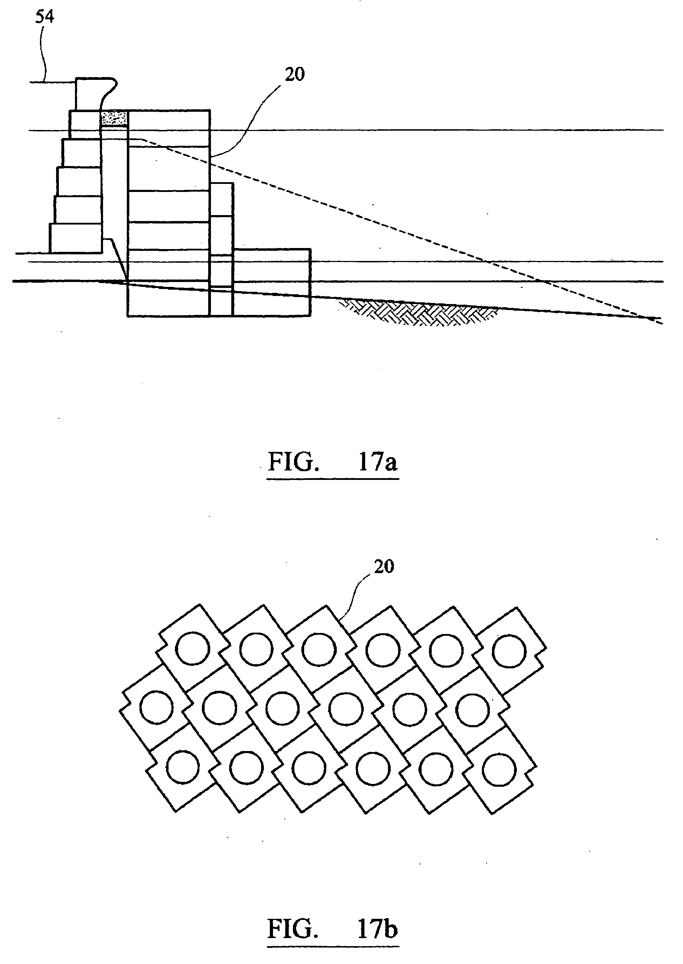

Referring to Figure 16, a prior art method of reinforcing an existing seawall 54 is shown. A rock armour barrier 64 is formed from rocks 66 stacked on the seabed 68. Referring to Figures 17a and 17b, the same seawall 54 can be protected by stacking blocks 20 in the vertical configuration of figures 10a to 10e. It can be seen from the drawings that the lateral extent of the assembly of blocks 20 of Figure 17a is much less than the lateral extent of the existing rock armour barrier 64. This means that less material is required.

It will be appreciated by person skilled in the art that the above embodiments have been described by way of example only, and not in any limitative sense, and that various alternations and modifications are possible without departure from the scope of the invention as defined by the appended claims.

## Claims

1. An assembly for dissipating wave energy through diffraction, the assembly **characterised by** comprising:
a plurality of first blocks (20b) and a plurality of second blocks (20a), wherein each said first and second block includes a pair of substantially planar end faces (23,25) and a plurality of substantially planar side faces, wherein a first side face meets an adjacent second side face to form an edge (22), and first and second cutouts (24) are formed at the ends of said first and second side faces remote from said edge, and each said first block has a first height between said end faces and each said second block has a second height, different from said first height, between said end faces;
the assembly further comprising a base row of alternating first and second blocks (20a,20b) interlocked by engagement of adjacent cutouts; and
at least one further row comprising a plurality of first blocks (20b) stacked on top of the base row, said at least one further row being laterally offset from the base row to form a stepped assembly, each said block being interlocked by engagement of adjacent cutouts.

2. An assembly according to claim 1, wherein each said block comprises a bore (26).

## Patentansprüche

1. Anordnung für die Dissipation von Wellenenergie durch Brechung, wobei die Anordnung **dadurch gekennzeichnet ist, dass** sie Folgendes umfasst:
eine Vielzahl von ersten Blöcken (20b) und eine Vielzahl von zweiten Blöcken (20a), wobei jeder genannte erste und zweite Block ein Paar im Wesentlichen flacher Endflächen (23, 25) und eine Vielzahl von im Wesentlichen flachen Seitenflächen hat, wobei eine erste Seitenfläche an eine benachbarte zweite Seitenfläche stößt, so dass eine Kante (22) gebildet wird und an den von der genannten Kante entfernten Enden der genannten ersten und zweiten Seitenflächen erste und zweite Ausschnitte (24) gebildet werden, und jeder genannte erste Block eine erste Höhe zwischen den genannten Endflächen hat und jeder genannte zweite Block eine zweite, von der genannten ersten Höhe verschiedene Höhe zwischen den genannten Endflächen hat;
wobei die Anordnung ferner eine Grundreihe aus abwechselnden ersten und zweiten Blöcken (20a, 20b) aufweist, die durch den Eingriff nebeneinander liegender Aussparungen miteinander verblockt sind; und
wenigstens eine weitere Reihe, die eine Vielzahl von auf die Grundreihe gestapelten ersten Blöcken (20b) aufweist, wobei die genannte wenigstens eine weitere Reihe von der Grundreihe seitlich versetzt ist, um eine gestufte Anordnung zu bilden, wobei die genannten Blöcke durch den Eingriff nebeneinander liegender Aussparungen jeweils miteinander verblockt sind.

2. Anordnung nach Anspruch 1, bei der jeder genannte Block eine Bohrung (26) aufweist.

## Revendications

1. Ensemble pour dissiper l'énergie des vagues à travers la diffraction, l'ensemble **caractérisé par** le fait de comprendre :
une pluralité de premiers blocs (20b) et une pluralité de seconds blocs (20a), où chaque dit premier et second bloc inclut une paire de faces terminales substantiellement planaires (23, 25) et une pluralité de faces latérales substantiellement planaires, où une première face latérale rencontre une seconde face latérale adjacente pour former un bord (22), et des première et seconde découpes (24) sont formées aux extrémités desdites première et seconde faces latérales à distance dudit bord, et chaque dit premier bloc a une première hauteur entre lesdites faces terminales et chaque dit second bloc a une seconde hauteur, différente de ladite première hauteur, entre lesdites faces terminales ;
l'ensemble comprenant en outre une rangée de base de premiers et seconds blocs alternés (20a, 20b) interverrouillés par la mise en prise de découpes adjacentes ; et
au moins une ultérieure rangée comprenant une pluralité de premiers blocs (20b) empilés au sommet de la rangée de base, ladite au moins une ultérieure rangée étant décalée latéralement de la rangée de base pour former un ensemble étagé, chaque dit bloc étant interverrouillé par la mise en prise de découpes adjacentes.

2. Ensemble selon la revendication 1, où chaque dit bloc comprend un alésage (26).
